# EUROPEAN PATENT SPECIFICATION

(11) **EP 1 713 351 B1**
(45) Date of publication and mention of the grant of the patent: **15.07.2009**
(21) Application number: 05704613.8
(22) Date of filing: 04.02.2005
(51) Int. Cl.: A23L 1/217, A23L 1/216, A23L 1/015, A23B 7/06

(54) **SELECTIVE WITHDRAWAL OF REDUCING SUGARS AND/OR ASPARAGINE DURING BLANCHING**
SELEKTIVE ENTFERNUNG VON REDUZIERENDEN ZUCKERN UND/ODER ASPARAGIN WÄHREND DES BLANCHIERENS
ELIMINATION SELECTIVE DE SUCRES REDUCTEURS ET/OU ASPARAGINE AU COURS DU BLANCHIMENT

(30) Priority: 06.02.2004 EP 04075395; 06.02.2004 US 541940 P
(43) Date of publication of application: 25.10.2006
(73) Proprietor: Koninklijke Coöperatie Cosun U.A., 4704 RA Roosendaal (NL)
(72) Inventor: SOMSEN, Dirk, Johan, NL-7206 BT Zutphen (NL); DE WAELE, Erwin, Theofiel, B-2910 Essen (BE)
(74) Representative: van Westenbrugge, Andries
(86) International application number: PCT/NL2005/000083
(87) International publication number: WO 2005/074716

(56) References cited:
- EP-A- 1 419 702
- WO-A-01/78524
- WO-A-02/39828
- WO-A-20/04004484
- WO-A-20/04026043
- WO-A-20/05004629
- GB-A- 978 818
- US-A- 3 109 739
- US-A- 3 835 222
- US-A- 5 965 189
- C.ARROQUI ET AL: "Losses by Diffusion of Ascorbic Acid During Recycled Water Blanching of Potato Tissue" JOURNAL OF FOOD ENGINEERING, vol. 52, 2002, pages 25-30, XP002324680

## Description

### Field of the invention

The invention relates to a process of producing a food product, in particular a fried, baked, roasted or grilled food product, starting from a food material containing reducing sugars. The process comprises a blanching step, wherein reducing sugars and/or asparagine are selectively withdrawn from the food material. The process of the invention results in improved food properties, thereby decreasing the acrylamide content of the food. The invention also relates to a blanched potato product with a low reducing sugar content with the retention of valuable water-soluble components, and to a fried, baked, roasted or grilled potato product having a low acrylamide content.

### Technical background

Blanching plays an important role in the preparation of many processed potato, vegetables and fruit products. The major functions of blanching upon potato processing are to inactivate or retard microbiological and enzymatic action, which cause rapid degeneration of quality, to soften tissue structures, to gelatinise starch and to leach reducing sugars from the food product.

The presence of reducing sugars in the potato material can lead to the development of unappealing dark-brown discoloration and a bitter taste during severe heat treatments, such as frying, baking, roasting, cooking and grilling. This is due to the occurrence of the so-called Maillard reaction, involving a nucleophilic attack by a free amino group present in a protein, a peptide or an amino acid on the carbonyl group of a reducing component. WO-A-02/39828 describes a process for the prevention and/or reduction of Maillard reaction in a foodstuff by contacting the foodstuff with an enzyme capable of oxidising a reducing group of a reducing sugar.

Especially in the potato industry, blanching is a regular step in the preparation of a potato product, wherein fresh cut potato entities, such as strips, slices or cubes, are immersed in hot water, the so-called blanching medium. The reducing sugars diffuse then from the potato tissue to the blanching medium. Often the diffusion rate is promoted by refreshing the blanching medium either continuously or batch-wise. However, the a-selective diffusion process results in the unwanted loss of other co-extracted water-soluble components contributing in an advantageous manner to the nutritional value, taste, texture, flavour, and/or colour of the potato product. Typical blanching yields mass losses of about 1%, subdivided in about one-fourth of wanted loss of reducing sugars and three-fourth of unwanted loss of valuable components, such as e.g. vitamins, organic acids, minerals and amino acids. Losses of diffusion of ascorbic acid during blanching of potato tissue in recycled water was investigated in J. Food Eng. 52 (2002) 25 - 30. Accordingly, a need exists for a method of diminishing the reducing sugar content of a food while avoiding the loss of other water-soluble components that add value to the food product.

A fermentation step for withdrawing reducing sugars after a possible blanching step is disclosed in US 4,140,801 and US 3,835,222. Therein yeast is directly blended into a potato mash - whether or not predried - prior to final dehydration into flakes, granules or the like.

An enzymatic treatment of a food product for diminishing the reducing sugar content is disclosed in WO-A-01/78524, wherein a potato substance is immersed or dipped in an aqueous enzyme preparation comprising inter alia glucose-oxidase. The enzymatic treatment is preferably performed after blanching during 2 to 15 minutes using water of 70 - 100 °C or 2 to 10 minutes in steam, but could also be employed concurrently with blanching. Upon addition of oxygen, glucose is converted by glucose oxidase to gluconic acid, thereby yielding hydrogen peroxide. A drawback is that with the method according to WO-A-01/78524 only glucose is converted, whereas other reducing sugars, such as fructose, remain in the food product. Also, high amounts of enzymes are required in this prior art method. Furthermore, WO-A-01/78524 mentions the option of simultaneous blanching and enzymatic treatments, but it is not clear to a skilled person how this can be realised.

The aforementioned methods of converting reducing sugars during or subsequent to blanching do not give a solution for the problem of unwanted loss of other water-soluble components. In addiction, direct contact of yeast or enzymes with the product implies the one-time use of micro-organisms or enzymes and is associated with possible effects on taste (a yeasty or fermentation taste) or other characteristics of the food product.

In addition, US 3,865,563 teaches the recycling of wash water in the production of potato products from potato slices by treating wash water to remove starch in a hydroclone and return the lean wash water to the washing step. The treatment is based on the density difference between starch and water, which principle is not applicable in the removal of reducing sugars dissolved in the blanching water.

GB 978,818 discloses a process to produce potato chips involving disintegration of potatoes to form a pulp of finely divided solids in liquid obtained from ruptured potato cells, which liquid may be separated from the pulp and treated to remove reducing sugars by means of fermentation or enzymatic oxidation. The liquid is then returned, and upon addition of gelling agents the finely divided solids phase is shaped into potato products. However, the removal of reducing sugars from the liquid obtained from disintegrated potato tissue does not relate to the leaching of reducing sugars from intact potato slices according to the invention, thereby using blanching water not forming part of the final potato product.

### Summary of the invention

The inventors have now found that the shortcomings of the prior art process can be overcome by using a blanching section wherein the reducing sugars diffused from the food product into the blanching medium are selectively withdrawn from the blanching medium, whereafter the blanching medium still containing valuable water-soluble components is reused in the blanching process, a so-called closed-loop process. As a result of the process according to the invention, the concentration of these water-soluble components in the blanching medium approaches equilibrium with their original concentration in the food substance. Thus, the driving force behind the diffusion of these components from the food is removed and the unwanted loss minimised. The selective withdrawal of the reducing sugars from the medium according to the invention can be achieved for example through fermentation, enzymatic conversion or selective adsorption of the reducing sugars.

Accordingly the present invention relates to a process of producing a food product by heat-treating a food material containing reducing sugars, comprising the step of blanching the food material, wherein the blanching step comprises subjecting the food product to an active blanching medium under blanching conditions in a blanching section to produce spent blanching medium, withdrawing reducing sugars and/or asparagine from the spent blanching medium to produce active blanching medium using a desugaring and/or asparagines-withdrawing means, and reusing the active blanching medium.

However, the above with the proviso that if only one of reducing sugars and asparagine is withdrawn from the spent blanching medium and said food product is potato slices, said reducing sugars or asparagine is not withdrawn using a column containing immobilized enzyme, wherein the effluent from the column is returned to the potato slices. Potato slice blanching and soaking solutions containing asparagines bering pumped through a column comprising immobilized enzyme, wherein the effluent from the column is returned to the potato slices, is disclosed in WO-A-2004/026043 for the case where the solution contains asparagines, and in WO-A-2005/004629 in case of solutions containing reducing sugars. Both are prior right documents.

In another aspect, the invention also pertains to a process of producing a food product by heat-treating a food material containing fructose, comprising the step of blanching the food material, wherein the blanching step comprises subjecting the food product to an active blanching medium under blanching conditions in a blanching section to produce spent blanching medium, withdrawing fructose from the spent blanching medium to produce active blanching medium using a desugaring means, and reusing the active blanching medium. Neither WO-A-2004/026043 nor WO-A-2005/004629 discloses fructose being the reducing sugar.

In yet another aspect, the invention pertains to process of producing a food product by heat-treating a food material containing reducing sugars, comprising the step of blanching the food material, wherein the blanching step comprises subjecting the food product to an active blanching medium under blanching conditions in a blanching section to produce spent blanching medium, withdrawing reducing sugars from the spent blanching medium to produce active blanching medium using a desugaring means, and reusing the active blanching medium, in which the reducing sugars are withdrawn from the spent blanching medium using mannitol dehydrogenase and/or glucose-fructose oxidoreductase. These specific enzymes are not disclosed in WO-A-2004/026043 and WO-A-2005/004629.

The closed loop blanching process according to the present invention permits extended blanching times, while it is known that with conventional blanching techniques blanching times longer than about 50 minutes yield unacceptable taste loss, without realising full withdrawal or conversion of the reducing sugars within this time.

Furthermore, by bringing the content of reducing sugars and/or asparagine down to lower values, the process of the invention decreases the formation of acrylamide during following severe heat treatments, because the potentially carcinogenic acrylamide is thought mainly to originate from the reaction of asparagine with the reducing sugars.

### Description of the invention

With the terms "withdraw" and "withdrawal" as used throughout the present description and claims is meant that the reducing sugars can either be directly removed from the blanching medium or converted into non-reducing components. This can be achieved by e.g. adsorption or absorption, fermentation or enzymatic conversion into non-reducing components. The withdrawal of reducing sugars yields a lower reducing sugar content and less components contributing to the Maillard reaction.

In one embodiment of the invention, the blanching and the withdrawal of the reducing sugars occur in one section. This is for instance possible and economically feasible in the case where the reducing sugars are withdrawn by micro-organisms having a retention time in the blanching section larger than their growth rate in the blanching medium.

In a preferred embodiment the reducing sugars are withdrawn from the spent blanching medium in a desugaring section which is separated from the blanching section, to which desugaring section a stream of spent blanching medium is conducted, and wherein a stream of active blanching medium recycled to the blanching section. In addition to the above-mentioned benefits, such a blanching process with separate sections for blanching and desugaring allows for the use of conditions in the desugaring section different from those in the blanching section, thereby enabling to operate each section at its proper optimum conditions.

The food product for which the process of the invention can be applied is a food product prepared from a food material containing reducing sugars. Preferably the food product is to be fried, baked or grilled before consumption, and most preferably is a potato product. The potato product can be a par-fried product, a snack or a dehydrate. Par-fried potato products are the most important product group in the potato processing industry: they can be made on the basis of whole, cut, slivered, mashed and/or dried potatoes. They include e.g. French-fries or pommes frites, fried small potatoes in a variety of shapes (e.g. segments, slices, etc.), rösti, potato croquettes and all kinds of varieties made from mashed or slivered potato. Within the par-fried product group, French-fries are the most contributing group, which can be further characterised on the basis of e.g. the method of preservation, cutting size or the method of final preparation. Crisps and extruded products form the most important potato product in the snacks product group. Products in the dried-product category are e.g. potato flakes, granules (mashed potato powder) and air-dried potato products.

With the term "reducing sugars" as used throughout the present description and claims are meant all carbohydrate molecules containing a free aldehyde or keto group, and/or hemiacetal group, for example fructose, glucose, maltose, galactose, lactose and pentose sugars such as xylose, and other aldehyde containing compounds. The invention is particularly directed to the selective withdrawal of fructose and/or glucose as the reducing sugars, since these are the reducing sugars which are predominant in the potato raw material.

The category of valuable, water-soluble components other than reducing sugars leaching from the food during blanching is mainly formed by minerals (predominantly potassium), sucrose, organic acids (e.g. citric and malic acid), amino acids (e.g. glutamine, aspartic acid and glutamic acid), water soluble vitamins (e.g. ascorbic acid) and solubilised proteins and starch.

In a conventional potato blanching process hot water is used as a blanching medium. Time and temperature are parameters that are typically adjusted to the extent to which microbiological and enzymatic action is to be inactivated, tissue to be softened and reducing sugars to be withdrawn. In the potato industry blanching temperatures are commonly varied between 60 and 100 °C and residence times are reported from 3 to 50 minutes, depending among others on the extent to which the reducing sugars are to be withdrawn. As mentioned before, the upper time limit is governed by fact that conventional blanching also affects the taste of the food product through the leaching of valuable components from the potato; beyond 50 minutes the taste of the potato becomes unacceptable. In contrast, the process of the invention prevents this leaching and hence, the blanching process is no longer limited by the above-mentioned blanching time scales and temperatures.

Because of the different product requirements and consumer acceptance levels that are associated with the occurrence of the Maillard reaction (e.g. a golden colour is often desirable for French-fries), there is not a single instruction on the maximum acceptable reducing sugar content. In the potato industry the maximum acceptable reducing sugar content varies from about 0.2 wt.% for crisp potatoes, about 0.3 wt.% for dried potatoes and about 0.5 wt.% for French-fries, measured on the basis of fresh weight. Within these categories further subdivisions are made.

It is therefore the aim of the invention to provide a process, wherein the reducing sugar content of the food product after blanching is less than 0.25 wt.%, preferably less than 0.1 wt.%, most preferably less than 0.05 wt.% of the blanched food.

For the production of French-fries it is preferred to slice the potato before blanching. While French-fries of any thickness may be used, a strip thickness of about 5x5 mm to about 16x16 mm is most advantageous. With strips thicker than 16 mm, the product becomes progressively harder, while at the lower boundary problems may be encountered due to excessive breakage in process equipment, distribution belts or product turnovers.

For a successful operation of the process of the invention it is important to avoid a continuous influent and effluent stream of fresh water and/or spent blanching medium as is often applied in the art; in the process of the invention the withdrawal is not driven by the refreshment rate of the blanching medium. In contrast, refreshing of blanching medium leads to loss of valuable components.

In case the withdrawal of the reducing sugars is performed in a desugaring section separate from the blanching section, these sections are preferably connected in a closed circuit. The process of blanching then comprises the following steps:
(a) reducing sugars diffuse from the food substance into the blanching medium in the blanching section; .
(b) the (continuous) flow of spent blanching medium containing reducing sugars is transferred to a desugaring section;
(c) the reducing sugars are withdrawn from the flow of spent blanching medium in the desugaring section thus yielding regenerated blanching medium; and
(d) the (continuous) flow of regenerated blanching medium, that is substantially free of reducing sugars or with a decreased level of reducing sugars therein, is returned to the blanching section,
and wherein preferably one or more pumps are used for steps (b) and (d). The product flow in the blanching section can be further enhanced by using means commonly applied for that purpose, such as a belt or an auger, thereby constantly transporting the food through the section. It is preferred that the flow of blanching medium from the blanching section to the desugaring section and back is continuous.

Advantageously, different conditions can be used in the desugaring section than in the blanching section. Temperature, pH and residence time (by volume ratio) can be optimised to enhance the withdrawal efficiency and will be discussed hereinafter.

In an embodiment of the invention the blanching medium from which the reducing sugars are to be removed in step (b) or have been removed and recirculate (step d) can optionally be concentrated by reversed osmosis and/or evaporation of water from the blanching medium, e.g. under atmospheric or vacuum conditions.

In one preferred embodiment of the invention, the selective withdrawal of the reducing sugars from the blanching medium is performed with one or more conversion agents as the sugar-withdrawing agent, wherein the one or more conversion agents capable of withdrawing reducing sugars are selected from the group consisting of bacteria, yeasts, moulds, in which case the selective withdrawal is called fermentation, and enzymes, in which case the selective withdrawal is referred to as enzymatic conversion.

When desugaring and blanching occur in one section, both the conversion agents and the food product are comprised in that particular section. Sometimes direct contact between the conversion agent and the food is to be prevented in order to avoid off-flavours, such as a yeasty taste to the product. It is preferred that in such an embodiment in the case the conversion agent is an enzyme, the enzyme is kept separated from the food product. It is economically favourable to use biofilters comprising the desired enzymes. Thus, the loss of enzyme during the blanching process of the invention is minimised. Preferably the enzyme is immobilised to an inert solid carrier. It is particularly preferred that the enzyme is incorporated into a solid packed bed.

The disadvantage of loss of conversion agent with the blanching medium in the case of making use of micro-organisms is overtaken if micro-organisms are used which growth rate in the blanching medium is higher than the rate at which blanching medium is evacuated, e.g. as water adhering to blanched product leaving the blanching section. In this way, a regular supply of fresh micro-organisms (during the blanching process) could be avoided.

In a preferred embodiment of a closed-loop blanching section the conversion agents are located in a separate desugaring section. Apart from a better control and higher efficiency of blanching and withdrawal of the reducing sugars, such closed loop blanching process has the advantage that a fermentation or yeasty taste to the food product can be prevented.

Advantageously the temperature can be optimised for the conditions of blanching and withdrawal in the respective blanching section and desugaring section accordingly. In order to minimise the decay of the conversion agent, the temperature in the desugaring section is preferably in the range of 5 to 75 °C, even more preferably of 10 -70 °C and most preferably between 35 and 65 °C.

The guidelines for the selection of a conversion agent for the purpose of the invention are that:
(i) the conversion agent is able to convert at least one of the reducing sugars being glucose and fructose;
(ii) the conversion agent does not substantially convert components other than the reducing sugars, and has therefore preferably no amylase and invertase activity;
(iii) both the conversion agent and its fermentation products have a food-grade status;
(iv) the fermentation products are non-reducing; and
(v) the conversion agent requires little or no addition of components to the blanching medium (e.g. reaction partners, trace elements and vitamins).

It is preferred that the conversion agent acts on both fructose and glucose. However, those conversion agents that solely convert either fructose or glucose can also be applied for the purpose of the invention, either alone or in combination with other conversion agents, preferably with those that are able to convert the other reducing sugar. In some embodiments of the invention it may suffice to withdraw only one component to reach a desirably low level of total reducing sugar content.

For the process of the invention continuous growth of the conversion agent - in the case of a micro-organism, i.e. bacteria, yeast or mould - in the blanching medium and/or during blanching is not necessary. Insufficient or no growth in the blanching medium of the micro-organism can be compensated for using a higher supply rate of "fresh entities" hereof.

In case the conversion agent is a bacterium, it is preferably selected from strains from the genera *Lactobacillus, Bacillus, Streptococcus, Oenococcus, Leuconostoc* and *Zymomonas,* and preferably those thereof that are able to catabolise glucose and fructose.

Examples of *Lactobacillus* strains are e.g. *L. helveticus, L. delbruecki subsp. bulgaricus, L. delbrueckii subsp. lactis, L. plantarum, L. fructosus* and *L. intermedius.* In particular the species *Lactobacillus gasseri, L. manihotivorans* and *L. plantarum* are preferred.

Of the genera *Bacillus* especially *Bacillus coagulans* is preferred.

Examples of *Streptococcus* strains are *Streptococcus thermophilus* strains.

An example of a *Leuconostoc* strain is *Leuconostoc mesenteroides.*

An example of an *Oenococcus* strain is *Oenococcus oeni.*

An especially preferred example of a *Zymomonas* strain is *Zymomonas mobilis.*

In case the micro-organism is a yeast, it is preferred to use *Saccharomyces cerevisiae* or *Candida magnoliae. Candida biodinii* and *C*. *famata* are further examples of yeasts that can be used.

In case the micro-organism is a mould, it is preferred to use a strain of the fungal genera *Aspergillus* or *Rhizopus,* especially the species *Aspergillus niger* or *Rhizopus oryzae.*

The choice of micro-organism is however not limited to these strains. Any micro-organism can be used that satisfies at least the above-mentioned criteria (i) - (iii) and preferably also criterion (iv), for instance those capable of converting glucose and/or fructose. Moreover, the invention is not limited to micro-organisms of one type or even one strain only. It is possible to apply combinations of different strains of one or more types, or to combine a micro-organism with for instance enzymes.

The micro-organisms are present in the desugaring section in concentrations between 10³ and 10¹³ colony forming units (CFU) per ml blanching medium.

For the purpose of the invention it is not necessary to refresh the batch of micro-organisms, as long as there is a sufficient amount of micro-organisms capable of converting the reducing sugars. The micro-organisms can be pre-cultured in a separate fermentor prior to implementation into a desugaring section. Such separated pre-culturing allows the application of optimum conditions for this purpose and is especially of interest when using micro-organisms exhibiting very low growing rates in the blanching medium. The blanching medium can be further supplied with additives that are known to promote microbial growth, such as vitamins and minerals, e.g. vitamin B12, traces of manganese.

In case the conversion agent is an enzyme, the source of the enzymes is not critical for use in the method of the present invention. Accordingly, the enzymes may be obtained from any source such as a plant, micro-organism, or animal. The enzymes are preferably obtained from a microbial source, such as a bacterium, a yeast or a mould.

The enzyme to be selected should catalyse the conversion of at least one of the reducing sugars, even when present at low concentrations, without substantively affecting sugars with a non-reducing character or other food components. Moreover, the enzyme should preferably convert the reducing sugar to non-reducing components only.

In one embodiment the conversion agent is glucose oxidase, an enzyme that acts on glucose alone. In the presence of oxygen, glucose oxidase converts glucose into gluconic acid and hydrogen peroxide, the enzyme advantageously showing activity even at temperatures as high as 70 °C that are associated with conventional blanching conditions.

Preferably, glucose oxidase is used in combination with the enzyme catalase. As described in GB-A-740379 such a catalase enzyme converts the H₂O₂ back to water and oxygen, the latter to be used by glucose oxidase again.

One of the commercially available glucose oxidase products exhibiting catalase activity is on the market by the name of Gluzyme Mono® 10.000 BG by Novozymes Ag (Denmark). However, the above-mentioned commercial enzyme only serves as an example and is not intended to limit the scope of the invention.

In another embodiment of the invention the enzyme is a mannitol dehydrogenase.

In yet another embodiment of the invention the enzyme is glucose-fructose oxidoreductase. Such an enzyme can be isolated from *Zymomonas mobilis*; it catalyses the formation of sorbitol and glucono-delta-lactone from fructose and glucose without the need for cofactor regeneration or yielding unwanted by-products, and thus advantageously withdrawing both reducing sugars from the blanching medium. The enzyme is described in more detail by M.M. Silveira and R. Jonas in "Biotechnological production of sorbitol", Appl. Microbiol. Biotechnol. (2002) 59: 400-408.

In the invention a combination of glucose oxidase, mannitol dehydrogenase and glucose-fructose oxidoreductase, or a combination with other conversion agents can also be used.

Typical amounts of enzyme are in the range from of 10² to 10⁵, preferably of 10³ to 5·10³ enzyme units (U) per gram of glucose in the spent blanching medium.

The conversion of glucose and/or fructose can be accompanied by a change in pH of the blanching medium, as for instance when using lactic acid bacteria (lactic acid production), glucose oxidase or micro-organisms exhibiting glucose-oxidase activity (gluconic acid production). The pH of the blanching medium can be controlled during conversion by using buffers or adding acceptable acids or bases such as hydrochloric acid or caustic soda. Preferably the pH of the blanching medium is controlled in the desugaring section in a range between 3 and 8, and most preferably between 5.5 and 7.

In another embodiment of the invention the sugar-withdrawing agent comprises a sorbent capable of selectively adsorbing reducing sugars and a stream comprising reducing sugars is withdrawn from the spent blanching medium. This stream comprising reducing sugars is withdrawn from the blanching medium with a process, wherein the sorbent is used in a chromatographic separation. Such a separation includes adsorption, absorption, inclusion, occlusion and chemical reaction as long as a certain component in a fluid is selectively retained on and/or in a sorbent.

Chromatographic separation of the reducing sugars is preferably accomplished using ion exclusion resins as a selective sorbent in the desugaring section, wherein the blanching medium is passed through one or more columns comprising the resin. Upon passage of a medium through the column the rate of passage of non-ionic components is retarded relative to the rate of passage of the ionic components. In this manner, a stream of blanching medium can be separated into a stream of non-ionic components, rich in reducing sugars and substantially free of valuable components, and a stream of ionic components, substantially free of reducing sugars and rich in valuable components such as (partially) deprotonated (organic) acids, minerals, salts, and net charged amino acids. The latter stream can be recirculated to the blanching section, while the former can be removed from the blanching process. The ion exclusion chromatographic separation of ionic from non-ionic solutes is well-described in EP-A-815.911, which contents is herein incorporated by reference

In the common case of a mixed stream comprising one or more reducing sugars and one or more valuable components, a skilled person can evaluate whether this mixed stream is to be recirculated to the blanching section or removed from the blanching process. This choice is for instance depending on the type of valuable components, the absolute and relative amounts of both the reducing sugars and the valuable components, total blanching time, desired reducing sugar content in the food product etc.

Although a straight elution process can be used, greater efficiency and better separations can be obtained commercially with the use of recycling or counter-current, simulated counter-current or pseudo-moving or simulated bed processes. Especially preferred are those chromatographic separation methods known as Simulated Moving Bed process (SMB) and Improved Simulated Moving Bed process (ISMB) as taught in e.g. US 4,412,866 and Trends in chromatographic separation of molasses, Zucker-industrie 122 (1997), no. 1, p. 28 - 33. These processes typically comprise multiple columns with bed heights of 1 to 6 m connected in series, each column having its distributors to allow fluid to flow into and out of such column. Such techniques have advantages of an economically favourable reduction of the required resin volume, an improved optimisation of the elution water volume and a lower dilution of the "product" fraction. The volume ratio of elution water W over feed F is typically 3 or lower.

Suitable types of chromatographic separation methods are known in the sugar industry for the extraction of sucrose from molasses (see e.g. US 4,312,678 and US 5,443,650).

The resin and conditions of elution are chosen such that the elution times of the non-ionic reducing sugars differ as much as possible from those of (valuable) ionic components, therewith aiming at a desirably small mixed stream comprising reducing sugars and valuable components.

Preferably the pH of the blanching medium is controlled in the desugaring section in a range between 3 and 8, and most preferably between 4 and 7.

The ion exclusion resin comprises a plurality of anion or cation exchange groups which are attached to a matrix, often constituted by a cross-linked copolymer. The nature of the functional groups depends somewhat on the particular materials being separated. In the preferred reducing sugar separations, the functional groups preferably are strong or weak acid groups, more preferably are strong acid groups, and most preferably are sulfonic acid groups. The functional groups generally are associated with a counter ion. The choice of counter ion also depends on the particular materials being separated. In the process of the invention the resin is preferably selected from the K⁺ or Na⁺-type, more preferably of the K⁺-type.

Preferably the resin is a strongly acidic gel type cation exchange resin based on cross-linked polystyrene, e.g. the resin available by Rohm & Haas as type XA8780-K+. Other applicable resin types commercially available include Lewatit MDS 1368 by Bayer, Amberlite CR1320 (Na+ or K+) and Daion FRK-31 by Mitsubishi.

During use the calcium salts comprised in the blanching medium will slowly replace the original cations. Therefore the columns are to be regenerated and pre-softened over time using methods known from the art. In order to prevent accumulation of solids in the resin after multiple uses, the blanching medium is first passed through a filtering section. This filtering section can be traditional sieve filtration, microfiltration, ultrafiltration or a combination thereof. The blanching medium can be conducted through the columns in a continuous or pulse-wise flow.

The column temperature is preferably maintained in the range of 50 to 95 °C, preferably of 60 to 80 °C. The temperature is chosen such that bacterial growth is prevented.

In an embodiment of the invention the blanching medium that is transferred to the chromatographic separation unit is preferably brought to a dry matter content as high as possible, meaning at a value just below precipitation of the least soluble component. For this purpose, the blanching medium is concentrated via e.g. reversed osmosis and/or evaporation. However, to allow an economically feasible operation, chromatographic separation can also be run at far lower concentrations, between 10 and 20 % dry matter.

The invention also enables reduction of the content of reducing sugars and/or asparagine, all major precursors of the potential carcinogenic acrylamide. Acrylamide can be formed from the reaction of asparagine with reducing sugars at temperatures higher then 120 °C. These temperatures are for instance reached when frying, baking, grilling or roasting the product prior to use. In the art it is known to realise a low acrylamide content through extended blanching, therewith further minimising the reducing sugar content at the cost of taste and nutritional value. The process of the invention now allows to avoid these disadvantages and still reduce the reducing sugar content during extended blanching. Use can also be made of enzymes directed to the conversion of asparagine (for example asparaginase) or a chromatographic separation with a sorbent capable of withdrawing asparagine in the blanching process of the invention. The withdrawal of both asparagine and reducing sugars can be performed either in consecutive steps or simultaneously.

In addition, with the process of the invention using a desugaring and/or asparagine-withdrawing means a stream comprising reducing sugars and asparagine is withdrawn from the spent blanching medium. This stream can then be subjected to further treatment, such as passage over a second sorbent capable of selectively adsorbing asparagine or treated with enzymes capable of converting the asparagine, like asparaginase. This low-asparagine stream can be recycled to the blanching section, thereby further reducing the acrylamide content of a heat-treated food product, for instance a food product that is grilled, roasted, baked or fried.

With the process of the invention it is also possible to selectively adsorb or convert asparagine from the blanching medium without the intermediate step of withdrawing reducing sugars from the spent blanching medium. For this purpose enzymes can be used as the conversion agent capable of converting asparagine, e.g. having asparaginase activity, or a chromatographic separation with a sorbent capable of selectively adsorbing asparagine can be used to minimise the acrylamide content of a food product, leaving its reducing sugar content unaffected. It is not necessary to perform this separation method simultaneously with blanching. On top of that, the withdrawal of asparagine allows to skip the blanching of the food, if blanching only served as a method to reduce the acrylamide content (by withdrawing the reducing sugars) from a heat-treated food.

In addition to the selective withdrawal of reducing sugars using fermentation, enzymatic conversion or chromatographic separation, or combinations thereof, according to the invention, the colour and taste of the food product can be further improved by applying a method of infusion. The blanching medium can be enriched with one or more of water-soluble and/or water dispersible components, especially those that are subject to leaching from the food during blanching, such as e.g. vitamin C, citric acid and calcium, sodium, potassium or other salts. Integrating such infusion process within a closed loop blanching process allows an economically feasible application of high value ingredients such as flavours, vitamins, organic acids, colours etc. upon industrial potato processing. The choice of the components to be added and the desired level thereof in the blanched food are dependent on the consumer's demands. Knowing those, the types and amounts of water-soluble and/or water dispersible value-adding components to be added to the blanching medium can be determined by a person skilled in the art.

The invention also relates to a blanched potato product prepared from fresh cut potato entities or intact potato slices, said product having a low reducing sugar content, with retention of valuable water-soluble components present in the raw potato material, e.g. minerals (predominantly potassium), sucrose, organic acids (e.g. citric and malic acid), amino acids (e.g. glutamine, aspartic acid and glutamic acid), water soluble vitamins (e.g. ascorbic acid) and solubilised proteins and starch. The extent of retention of valuable water-soluble components can be measured from the potassium content of the potato product, which is at least 3 g/kg, more preferably at least 4 g/kg, most preferably at least 5 g potassium per kg product. Traditional water blanching techniques yield a substantial loss of potassium, proportional to the loss of the value-adding components mentioned herein. However, a potato product that is prepared using the closed loop blanching system of the invention is characterised by a potassium content of preferably at least 3 g/kg, more preferably at least 4 g/kg, most preferably at least 5 g/kg of the final product. Its citric acid content is at least 3.5 g/kg, more preferably at least 4.5 g/kg, most preferably at least 5.5 g/kg of the final product. The sucrose content of the blanched potato product is preferably at least 0.5 g/kg, more preferably at least 1 g/kg, most preferably at least 1.5 g/kg of the final product. Such a blanched potato product would preferably have a reducing sugar content of less than 0.25 wt.%, preferably even less than 0.1 wt.% of the product, most preferably less than 0.05 wt.%. The blanched potato product is preferably a French-fry.

The blanching history of a potato product is indicated by the presence of sodium acid pyrophosphate (SAPP) and degradation products thereof, e.g. orthophosphates. These chemical additives are often included in the blanching step to preserve the whiteness of the potatoes during processing. Trace amounts of these chelating agents in a potato product serve as proof that blanching has occurred, especially when the potato product contains at least 100 mg of an acid pyrophosphate, in particular SAPP, per kg par-fried product.

The invention further relates to blanched potato products being fried, baked, roasted or grilled, with an acrylamide content lower than 150 µg per kg, preferably lower than 100 µg per kg, more preferably below the detection limit of 50 µg per kg of the potato product. Moreover, these low levels in combination with retention of valuable water-soluble components originating from the potato raw material can also not be achieved using blanching methods known in the art. With the process of the invention a fried, baked, roasted or grilled potato product is characterised by a potassium content of preferably at least 3 g/kg, more preferably at least 4 g/kg, most preferably at least 5 g/kg of the final product. Its citric acid contents is preferably at least 3.5 g/kg, more preferably at least 4.5 g/kg, most preferably at least 5.5 g/kg of the final product. Its sucrose content is preferably at least 0.5 g/kg, more preferably at least 1 g/kg, most preferably at least 1.5 g/kg of the final product. The potato product is preferably a final prepared (heat-treated) French-fry.

### Example 1 - Enzymatic conversion of glucose in blanching water

Blanching water from an industrial potato processing operation was filtrated. Its concentrations of glucose, fructose and sucrose as determined by HPLC using an IC column (Dionex PA1) with a PAD detector was 0.033 wt.%, 0.028 wt.% and 0.061 wt.%, respectively. The pH value of the filtered blanching water was 5.80.

The filtrate was then sterilised for 10 minutes at 120 °C . After sterilisation the blanching water was divided in 200 ml portions over 4 sterile flasks, each having 0.066 g glucose. The 4 flasks were then stored at 50 °C in a bath.

Apart from that, a 10.0 g/l enzyme solution was prepared from *Gluzyme Mono*^{®} *10000 BG* powder (Novozymes AG, Denmark), originating from *Aspergillus niger,* the powder further containing a non-standardised amount of catalase side activity. The enzyme solution thus prepared corresponded to a glucose oxidase concentration of 100 GODU (or Glucose OxiDase Units) per ml enzyme solution.

120 µl of a 35% H₂O₂ solution was added to each of the 4 flasks, immediately followed by the addition of such amounts of the enzyme solution that the flasks contained 500, 1000, 2000 and 4000 GODU per gram of glucose. The enzyme addition was taken as the starting point of the enzymatic conversion.

Samples were then taken after t = 20, 40, 120 and 240 minutes, immediately thermally inactivated in a water bath at 98 °C for 5 min. This treatment stopped the enzyme activity and glucose conversion. The samples were stored at - 20 °C until these were analysed on pH, off-flavours and levels of glucose, fructose and sucrose. It was observed that the dosage of 2000 GODU per gram of glucose resulted in a conversion of about 80 % of the glucose within 40 minutes; twice the amount of enzyme yielded about 90 % conversion over the same period, showing no further glucose removal after the first 40 minutes. No changes in the fructose and sucrose levels were observed.

The pH dropped in the first 40 minutes from 5.80 to 5.52 for the highest (4000 GODU per gram glucose) and 5.58 for the lowest enzyme addition level (500 GODU per gram glucose) and then remained stable at those values.

In addition, no formation of off-flavours could be sensorically detected during the whole duration of the enzymatic conversion.

### Example 2 - Ion exclusion chromatography on blanching water

Blanching water was used similar to that of example 1. The dry solid content of the blanching water was adjusted to 10 degrees Brix (°B) by evaporation in a rotary evaporator.

The exchange resin was commercially available from Rohm & Haas as type XA8780-K+, with 220 µm resin beads. The resin beads were packed in a glass-jacketed column with a volume of 450 ml resin; the height of the resin bed was 100 cm with a diameter of 2.43 cm. The jacket was heated to 80 °C by circulating hot water around it.

A pulse of 20 ml blanching water - at 10 °B was injected on top of the column. A desorbent stream of demineralised water having a conductivity < 1 µSiemens was fed through a stainless steel coil submerged in a 80 °C water bath to the column at a flow rate of 600 ml/h using a positive displacement pump. At the outlet of the column, the desorbent stream was collected in fractions of 14.85 ml corresponding to a bed volume BV, i.e. the volume of effluent fraction over the total volume of adsorbent resin, of 0.033 BV.

The effluent fractions were analysed on sugar content by HPLC using an IC column (Dionex PA1) with a PAD detector. The concentration of amino acids was determined by HPLC using a RP 18 column (by Phenomenex) and a UV detector. Potassium was determined by a Flame Spectrophotometer. For measurement of the Brix a digital refractometer (PR-101 of Atago) was used.

It was observed that of the sugars the disaccharides (mainly sucrose) were eluted first, followed by glucose and fructose only after 0.6 BV. Withdrawal of the stream after this point would lead to a loss of about 50% of the disaccharides in the blanching process. The first stream could be recycled to the blanching section, comprising about 50 % of the disaccharides and around 75 % of the total solute Brix.

At this separation point of 0.6 BV more than 96% of the potassium ions present have left the column in that first stream. The profile of (partly) dissociated acids like the organic acids citric acid, malic acid and the amino acids aspartic acid and glutamic acid closely resembles that of potassium. In the blanching process these would thus be recycled to the blanching section with the first stream.

At the separation point of 0.6 BV, less than 5% of the weakly dissociated asparagine and glutamine were recovered in the first stream. The withdrawal of about 95 % hereof with the stream comprising the reducing sugars is particularly interesting for the prevention of the formation of acrylamide in fried potato products.

### Example 3 - Fermentation of the reducing sugars in blanching water

Blanching water was used similar to that of example 1. Before use the blanching water was sterilised (10 minutes at 120 °C) and centrifuged.

A bioreactor was filled with 400 ml of the supernatant. Throughout the experiment temperature and pH were monitored and controlled at 30 °C and pH 6.0, the latter by adding 2.0 N KOH.

Lactic acid bacteria *Lactobacillus manihotivorans* (LMG 1801) were added hereto as a pellet obtained after centrifuging at 10,000 rpm. a primary culture grown on MRS broth. After 24 hours of pre-culturing a clear "lactic acid flavour" was observed, rod shaped bacteria were observed under the microscope, both indicating the presence of a monoculture of *L. manihotivorans.*

At the starting point of the fermentation, 100 ml of this pre-culture was mixed with 900 ml of the blanching water supernatant. At different times during the fermentation and until 24 hours after starting, samples were taken. Each sample was immediately thermally inactivated in a water bath at 98 °C for 5 min, hereby stopping all microbiological and enzymatic activity. It was then stored at - 20 °C until it was analysed by HPLC for the levels of reducing sugars (glucose, fructose), organic acids (malic acid, lactic acid, formic acid, PCA or Pyrrolidonecarboxylic Acid, acetic acid, propionic acid, butyric acid, citric acid) and amino acids (asparagine, glutamine, aspartic acid, glutamic acid). For determination of the sugar concentrations a PA1 column (by Dionex) with PAD detection was used, the organic acids were analysed with a combination of AS1 and AS11HC columns (both by Dionex) with conductivity detection, and the amino acid concentrations were determined applying RP18 column (ex. Phenomenex) with UV detection.

The biomass growth was monitored by measuring the optical density (OD) of a sample at 600 nm. For the relation between the optical density and the biomass the reader is referred to M.H.N. Hoefnagel et al. Metabolic engineering of lactic acid bacteria, the combined approach: Kinetic modelling, metabolic control and experimental analysis, Microbiology (2002), vol. 148, pp. 1003-1013.

It was observed that all glucose was converted during the first 3.5 hours of fermentation and that the fructose concentration was decreased to negligible concentrations after 5.5 hours. Growth was detected during the first 6 hours of fermentation, after which the bacterium stopped growing.

In addition it was observed after 24 h fermentation that the concentrations of the 4 amino acids were unchanged, just as the levels of citric acid and PCA. The concentrations of lactic acid and acetic acid were increased by a factor 7 and 14, respectively, while the malic acid concentration dropped to zero, all indicating the fermentation activity of *L. manihotivorans.* Formic acid, propionic acid and butyric acid remained at negligible levels during fermentation. Samples before and after fermentation were sensorically checked for off-flavours, but none were detected.

## Claims

1. A process of producing a food product by heat-treating a food material containing reducing sugars, comprising the step of blanching the food material, wherein the blanching step comprises subjecting the food product to an active blanching medium under blanching conditions in a blanching section to produce spent blanching medium, withdrawing reducing sugars and/or asparagine from the spent blanching medium to produce active blanching medium using a desugaring and/or asparagine-withdrawing means, and reusing the active blanching medium,
with the proviso that if only one of reducing sugars and asparagine is withdrawn from the spent blanching medium and said food product is potato slices, said reducing sugars or asparagine is not withdrawn using a column containing immobilized enzyme, wherein the effluent from the column is returned to the potato slices.

2. A process of producing a food product by heat-treating a food material containing fructose, comprising the step of blanching the food material, wherein the blanching step comprises subjecting the food product to an active blanching medium under blanching conditions in a blanching section to produce spent blanching medium, withdrawing fructose from the spent blanching medium to produce active blanching medium using a desugaring means, and reusing the active blanching medium.

3. A process of producing a food product by heat-treating a food material containing reducing sugars, comprising the step of blanching the food material, wherein the blanching step comprises subjecting the food product to an active blanching medium under blanching conditions in a blanching section to produce spent blanching medium, withdrawing reducing sugars from the spent blanching medium to produce active blanching medium using a desugaring means, and reusing the active blanching medium, in which the reducing sugars are withdrawn from the spent blanching medium using mannitol dehydrogenase and/or glucose-fructose oxidoreductase.

4. Process according to claim 1, in which reducing sugars are withdrawn from the spent blanching medium by means of micro-organisms or chromatographic separation, and/or asparagine is withdrawn by means of chromatographic separation.

5. Process according to claim 2, in which the fructose is withdrawn from the spent blanching medium by means of micro-organisms, enzyme or chromatographic separation.

6. Process according to claim 4, in which the reducing sugars are withdrawn from the spent blanching medium by means of micro-organisms.

7. Process according to claim 1, in which both reducing sugars and asparagine are withdrawn from the spent blanching medium to produce active blanching medium using desugaring and asparagine-withdrawing means.

8. Process according to claim 7, wherein the sugar-withdrawing means is one or more conversion agents capable of converting reducing sugars, wherein the conversion agents are selected from the group consisting of micro-organisms and enzymes.

9. The process according to claim 8, wherein the enzyme is a glucose oxidase, a mannitol dehydrogenase or a glucose-fructose oxidoreductase, or a combination thereof.

10. The process according to claim 3, 6, 8 or 9 wherein the enzymes are kept separated from the food material.

11. The process according to any one of the preceding claims, wherein the reducing sugars are withdrawn from the spent blanching medium in a desugaring section which is separated from the blanching section, to which desugaring section a stream of spent blanching medium is conducted, and wherein a stream of active blanching medium is recycled to the blanching section.

12. The process according to claim 4, 5 or 8, wherein the micro-organisms are selected from the bacterial genera Lactobacillus, Bacillus, Streptococcus, Oenococcus, Leuconostoc and Zymomonas, yeast genera Saccharomyces and Candida, and fungal genera. Aspergillus and Rhizopus, preferably said micro-organisms are selected from the species *Bacillus coagulans, Lactobacillus gasseri, Lactobacillus manihotivorans, Lactobacillus plantarum, Streptococcus thermophilus* and *Zymomonas mobilis.*

13. The process according to claim 1, 2, 4, 6 or 7, wherein the sorbent is used in a chromatographic separation method such as a Simulated Moving Bed process (SMB) or an Improved Simulated Moving Bed process (ISMB).

14. A blanched potato product prepared from fresh cut potato entities or intact potato slices, comprising at least 3 g potassium and at least 3.5 g citric acid per kg product.

15. The blanched potato product according to claim 14, further comprising a reducing sugar content less than 0.25 wt.%, preferably less than 0.1 wt.%, more preferably less than 0.05 wt.% of the product.

16. The blanched potato product according to claim 14 or 15, being fried, baked, roasted or grilled, and having an acrylamide content lower than 150 µg per kg potato product.

17. The blanched potato product according to any one of claims 14 - 16, further comprising at least 100 mg of an acid pyrophosphate per kg product.

## Patentansprüche

1. Verfahren zur Herstellung eines Lebensmittelprodukts durch Hitzebehandlung eines Lebensmittelmaterials, das reduzierende Zucker enthält, umfassend den Schritt, das Lebensmittelmaterial zu blanchieren, wobei der Blanchierungsschritt beinhaltet, das Lebensmittelprodukt einem aktiven Blanchierungsmedium unter Blanchierungsbedingungen in einer Blanchierungssektion auszusetzen, um verbrauchtes Blanchierungsmedium herzustellen, Entziehen reduzierender Zucker und/oder Asparagine von dem verbrauchten Blanchierungsmedium, um aktives Blanchierungsmedium zu produzieren unter Benutzung von Entzuckerungs- und/oder Asparagin entziehenden Mittel und Wiederbenutzung des aktiven Blanchierungsmediums,
unter der Bedingung, dass falls nur einer der reduzierenden Zucker und Asparagine dem verbrauchten Blanchierungsmedium entzogen wird und das besagte Lebensmittelprodukt Kartoffelscheiben sind, die besagten reduzierenden Zucker oder Asparagine nicht unter Verwendung einer Kolonne entzogen wird, die immobilisierte Enzyme enthält, wobei der Abfluss von der Kolonne zu den Kartoffelscheiben zurückgeführt wird.

2. Verfahren zur Herstellung eines Lebensmittelprodukts durch Hitzebehandlung eines Lebensmittelmaterials, das Fruktose enthält, umfassend den Schritt, das Lebensmittelmaterial zu blanchieren, wobei der Blanchierungsschritt beinhaltet das Lebensmittelprodukt einem aktiven Blanchierungsmedium unter Blanchierungsbedingungen in einer Blanchierungssektion auszusetzen, um verbrauchtes Blanchierungsmedium herzustellen, Entziehen von Fruktose von dem verbrauchten Blanchierungsmedium, um ein aktives Blanchierungsmedium herzustellen unter Verwendung eines Entzuckerungsmittels, und Wiederverwendung des aktiven Blanchierungsmediums.

3. Verfahren zur Herstellung eines Lebensmittelprodukts durch Hitzebehandlung eines Lebensmittelmaterials, das reduzierende Zucker enthält, umfassend den Schritt das Lebensmittelmaterial zu blanchieren, wobei der Blanchierungsschritt beinhaltet, das Lebensmittelprodukt einem aktiven Blanchierungsmedium unter Blanchierungsbedingungen in einer Blanchierungssektion auszusetzen, um verbrauchtes Blanchierungsmedium herzustellen, Entziehung von reduzierender Zucker von dem verbrauchten Blanchierungsmedium, um aktives Blanchierungsmedium herzustellen unter Verwendung von Entzuckerungsmitteln, und Wiederverwertung des aktiven Blanchierungsmediums, bei dem die reduzierenden Zucker von dem verbrauchten Blanchierungsmedium entfernt sind unter Verwendung von Manitoldehydrogenase und/oder Glukose-Fruktose Oxidoreduktase.

4. Verfahren nach Patentanspruch 1 bei dem reduzierende Zucker von dem verbrauchten Blanchierungsmedium entzogen werden mittels Mikroorganismen oder chromatographischer Trennung, und/oder Asparagine mittels chromatographischer Trennung entzogen wird.

5. Verfahren nach Patentanspruch 2, bei dem die Fruktose von dem verbrauchten Blanchierungsmedium entzogen wird mittels Mikroorganismen, Enzymen oder chromatographischer Trennung.

6. Verfahren gemäß Patentanspruch 4, bei dem die reduzierenden Zucker von dem verbrauchten Blanchierungsmedium entzogen werden mittels Mikroorganismen.

7. Verfahren gemäß Patentanspruch 1, bei dem sowohl reduzierende Zucker als auch Asparagine von dem verbrauchten Blanchierungsmedium entzogen werden, um aktives Blanchierungsmedium herzustellen unter Verwendung von Entzuckerungs- und Asparagine-Entfernungsmitteln.

8. Verfahren nach Anspruch 7, wobei die Zucker-Entfernungsmittel ein oder zwei Konvertierungsagens sind, die in der Lage sind, reduzierende Zucker zu konvertieren, wobei das Konversionsagens aus der Gruppe enthaltend Mikro-Organismen und Enzyme ausgewählt sind.

9. Prozess gemäß Patentanspruch 8, wobei das Enzym eine Glukoseoxidase, eine Manitol-Dehydrogenase oder eine Glukose-Fruktose Oxidoreduktase oder eine Kombination davon ist.

10. Verfahren gemäß Patentanspruch 3, 6, 8 oder 9, wobei die Enzyme von dem Lebensmittelmaterial getrennt gehalten werden.

11. Verfahren gemäß einem der vorhergehenden Patentansprüche, wobei die reduzierenden Zucker von dem verbrauchten Blanchierungsmedium entzogen werden in einer Entzuckerungssektion, die getrennt ist von der Blanchierungssektion, ein Strom von verbrauchtem Blanchierungsmedium zu der Entzuckerungssektion geführt wird, und wobei ein Strom von aktivem Blanchierungsmedium zu der Blanchierungssektion recycelt wird.

12. Verfahren gemäß Anspruch 4, 5 oder 8 wobei die Mikroorganismen ausgewählt sind von den Bakterienstämmen Lactobacillus, Bacillus, Streptococcus, Oenococcus, Leuconostoc und Zymomonas, Hefestämme Saccharomyces und Candida und Pilzstämme Aspergillus und Rhizopus, wobei die besagten Mikroorganismen vorzugsweise ausgewählt sind von der Gattung *Bacillus coagulans, Lactobacillus gasseri, Lactobacillus manihotivorans, Lactobacillus plantarum, Streptococcus thermophilus* und *Zymomonas mobilis.*

13. Verfahren gemäß Patentanspruch 1, 2, 4, 6 oder 7, wobei das Sorptionsmittel in einem chromatographischen Trennungsverfahren wie Simulated Moving Bed Process (SMB) oder Improved Simulated Moving Bed Process (ISMB) verwendet wird.

14. Ein blanchiertes Kartoffelprodukt, das von frisch geschnittenen Kartoffelstücken oder intakten Kartoffelscheiben hergestellt wird, enthaltend zumindest 3 g Kalium und zumindest 3,5 g Zitronensäure pro kg Produkt.

15. Ein blanchiertes Kartoffelprodukt gemäß Patentanspruch 14, weiterhin enthaltend einen reduzierenden Zuckergehalt von weniger als 0,25 Gew.-%, bevorzugt weniger als 0,1 Gew.-%, mehr bevorzugt weniger als 0,05 Gew.-% des Produkts.

16. Ein blanchiertes Kartoffelprodukt gemäß Patentanspruch 14 oder 15, das frittiert, gebacken, geröstet oder gegrillt ist und einen Acrylamidinhalt von weniger als 150 µg pro kg Kartoffelprodukt aufweist.

17. Ein blanchiertes Kartoffelprodukt gemäß einem der Patentansprüche 14 bis 16, weiterhin enthaltend zumindest 100 mg eines sauren Pyrophosphats pro kg Produkt.

## Revendications

1. Procédé de production d'un produit alimentaire par traitement par la chaleur d'un aliment contenant des sucres réducteurs, comprenant l'étape de blanchiment de l'aliment, dans lequel l'étape de blanchiment comprend la soumission du produit alimentaire à un milieu de blanchiment actif dans des conditions de blanchiment dans une section de blanchiment afin de produire un milieu de blanchiment usé, l'élimination des sucres réducteurs et/ou de l'asparagine du milieu de blanchiment usé afin de produire un milieu de blanchiment actif en utilisant un moyen d'élimination des sucres et/ou de l'asparagine, et la réutilisation du milieu de blanchiment actif,
sous réserve que si seulement un élément parmi les sucres réducteurs et l'asparagine est éliminé du milieu de blanchiment usé et ledit produit alimentaire est constitué de tranches de pommes de terre, lesdits sucres réducteurs ou ladite asparagine ne sont pas éliminés en utilisant une colonne contenant une enzyme immobilisée, dans laquelle l'effluent de la colonne est ramené vers les tranches de pomme de terre.

2. Procédé de production d'un produit alimentaire par traitement par la chaleur d'un aliment contenant du fructose, comprenant l'étape de blanchiment de l'aliment, dans lequel l'étape de blanchiment comprend la soumission du produit alimentaire à un milieu de blanchiment actif dans des conditions de blanchiment dans une section de blanchiment afin de produire un milieu de blanchiment usé, l'élimination du fructose du milieu de blanchiment usé afin de produire un milieu de blanchiment actif en utilisant un moyen d'élimination des sucres, et la réutilisation du milieu de blanchiment actif.

3. Procédé de production d'un produit alimentaire par traitement par la chaleur d'un aliment contenant des sucres réducteurs, comprenant l'étape de blanchiment de l'aliment, dans lequel l'étape de blanchiment comprend la soumission du produit alimentaire à un milieu de blanchiment actif dans des conditions de blanchiment dans une section de blanchiment afin de produire un milieu de blanchiment usé, l'élimination des sucres réducteurs du milieu de blanchiment usé afin de produire un milieu de blanchiment actif en utilisant un moyen d'élimination des sucres, et la réutilisation du milieu de blanchiment actif dans lequel les sucres réducteurs sont éliminés du milieu de blanchiment usé en utilisant une mannitol déshydrogénase et/ou une oxydoréductase glucose-fructose.

4. Procédé selon la revendication 1, dans lequel les sucres réducteurs sont éliminés du milieu de blanchiment usé à l'aide de micro-organismes ou d'une séparation chromatographique, et/ou l'asparagine est éliminée à l'aide d'une séparation chromatographique.

5. Procédé selon la revendication 2, dans lequel le fructose est éliminé du milieu de blanchiment usé à l'aide de micro-organismes, d'enzymes ou d'une séparation chromatographique.

6. Procédé selon la revendication 4, dans lequel les sucres réducteurs sont éliminés du milieu de blanchiment usé à l'aide de micro-organismes.

7. Procédé selon la revendication 1, dans lequel les sucres réducteurs et l'asparagine sont éliminés du milieu de blanchiment usé afin de produire un milieu de blanchiment actif en utilisant des moyens d'élimination des sucres et de l'asparagine.

8. Procédé selon la revendication 7, dans lequel le moyen d'élimination des sucres est un ou plusieurs agents de conversion capables de convertir les sucres réducteurs, dans lequel les agents de conversion sont sélectionnés dans le groupe constitué de micro-organismes et d'enzymes.

9. Procédé selon la revendication 8, dans lequel l'enzyme est une glucose oxydase, une mannitol déshydrogénase ou une oxydoréductase glucose-fructose, ou une combinaison de celles-ci.

10. Procédé selon la revendication 3, 6, 8 ou 9 dans lequel les enzymes sont maintenues séparées de l'aliment.

11. Procédé selon l'une quelconque des revendications précédentes, dans lequel les sucres réducteurs sont éliminés du milieu de blanchiment usé dans une section d'élimination des sucres qui est séparée de la section de blanchiment, section d'élimination des sucres vers laquelle un flux de milieu de blanchiment usé est conduit, et dans lequel un flux de milieu de blanchiment actif est recyclé vers la section de blanchiment.

12. Procédé selon la revendication 4, 5 ou 8, dans lequel les micro-organismes sont sélectionnés parmi les genres bactériens Lactobacillus, Bacillus, Streptococcus, Oenococcus, Leuconostoc et Zymomonas, les genres de levure Saccharomyces et Candida, et les genres fongiques Aspergillus et Rhizopus, de préférence lesdits micro-organismes sont sélectionnés parmi les espèces *Bacillus coagulans, Lactobacillus gasseri, Lactobacillus manihotivorans, Lactobacillus plantarum, Streptococcus thermophilus* et *Zymomonas mobilis.*

13. Procédé selon la revendication 1, 2, 4, 6 ou 7, dans lequel le sorbant est utilisé dans une méthode de séparation chromatographique telle qu'un processus de simulation de lit mobile (SMB) ou un processus de simulation améliorée de lit mobile (ISMB).

14. Produit à base de pommes de terre blanchies préparé à partir de morceaux de pommes de terre fraîches coupées ou de tranches de pommes de terre intactes, comprenant au moins 3 g de potassium et au moins 3,5 g d'acide citrique par kg de produit.

15. Produit à base de pommes de terre blanchies selon la revendication 14, comprenant en outre une teneur en sucres réducteurs inférieure à 0,25 % en poids, de préférence inférieure à 0,1 % en poids, plus préférablement inférieure à 0,05 % en poids du produit.

16. Produit à base de pommes de terre blanchies selon la revendication 14 ou 15, frit, cuit au four, rôti ou grillé, et possédant une teneur en acrylamide inférieure à 150 µg par kg de produit à base de pommes de terre.

17. Produit à base de pommes de terre blanchies selon l'une quelconque des revendications 14 - 16, comprenant en outre au moins 100 mg d'un acide pyrophosphate par kg de produit.
